# EUROPEAN PATENT APPLICATION

(11) **EP 2 578 951 A2**
(43) Date of publication of application: **10.04.2013**
(21) Application number: 11786824.0
(22) Date of filing: 22.04.2011
(51) Int. Cl.: F24D 10/00, F24D 19/10, F24D 19/08

(54) **SMALL-SCALE COMBINED HEAT AND POWER SYSTEM AND METHOD FOR CONTROLLING SAME**

(30) Priority: 28.05.2010 KR 20100050451
(71) Applicant: Kyungdong Navien Co., Ltd., Pyungtaek-si Gyunggi-do 450-818 (KR)
(72) Inventor: MIN, Tae Sik, Seoul 156-070 (KR)
(74) Representative: Habermann, Hruschka & Schnabel
(86) International application number: PCT/KR2011/002923
(87) International publication number: WO 2011/149191

(57) **Abstract**

Provided is a small-scale combined heat and power (CHP) system which is capable of using existing equipment to achieve a cooling function that maintains a temperature of a heat medium stored in a heat-medium storage tank and introduced into a waste-heat recovery heat exchanger of a CHP generator at a suitable temperature range for waste-heat recovery so as to enable the CHP generator to continuously operate and smoothly supply power without being shout down, and a method for controlling the same. The small-scale CHP system includes a CHP generator (100) comprising a waste-heat recovery heat exchanger (110) recovering waste heat generated during generation of electricity, a boiler (200) comprising a main heat exchanger (210) through which a heat medium supplied from the waste-heat recovery heat exchanger (110) passes and a combustion fan (230) supplying air toward a burner (220) for supplying combustion heat into the main heat exchanger (210), and a heat-medium storage tank (300) storing the circulated heat medium, the heat-medium storage tank (300) supplying the stored heat medium into the waste heat recovery heat exchanger (110) of the CHP generator (100). The heat-medium storage tank (300) includes a temperature-sensing unit (530) measuring the temperature of the heat medium stored in the heat-medium storage tank, and a control unit (600) controlling the combustion fan (230) to rotate and supply air into the heat medium passing through the main heat exchanger (210) when the temperature of the heat medium measured by the temperature-sensing unit (530) is greater than a first set temperature in a case where a heating and hot water load does not exist.

## Description

### TECHNICAL FIELD

The present invention relates to a small-scale combined heat and power system and a method for controlling the same, and more particularly, to a small-scale combined heat and power system in which waste heat generated in a combined heat and power generator is used for heating and hot water, and a heat medium stored in a heat-medium storage tank is adjusted in temperature by using a combustion fan of a boiler so that the heat medium exceeds a preset temperature to circulate the heat medium, thereby continuously generating power without being shut down, and a method for controlling the same.

### BACKGROUND ART

Small-scale combined heat and power (CHP) systems are total energy systems which convert chemical energy of a fuel into electricity energy by using various engines such as internal combustion engines, gas turbines, fuel cell engines, stirling engines, and the like to efficiently utilize waste heat generated during the conversion process. The power generation method using such a small-scale CHP system may be a high efficiency energy technology which is capable of improving the efficiency of energy utilization two times or more when compared to that according to an existing power generation method. In addition, the power generation method using the small-scale CHP system may be an eco-friendly technology that significantly reduces potential carbon oxide (CO) emissions which are a major contributor to global warming. Thus, each country is actively promoting the introduction of the power generation method using the small-scale CHP system.

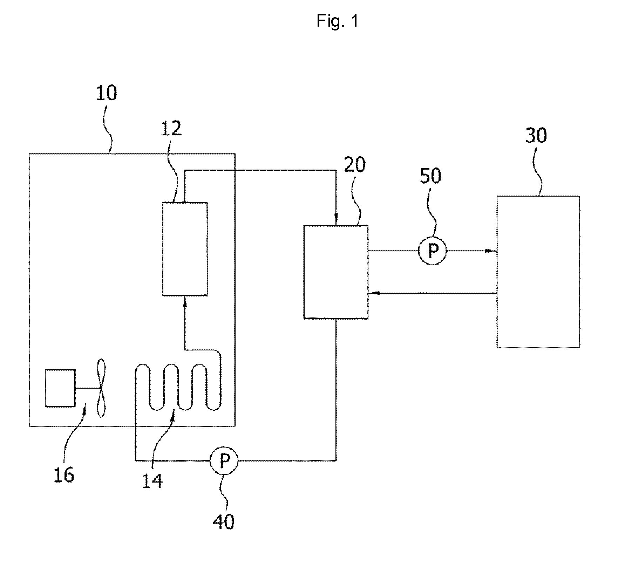

FIG. 1 is a schematic view of a small-scale combined heat and power system according to a related art.

The small-scale CHP system according to the related art includes a CHP generator 10 generating power and including a waste-heat recovery heat exchanger 12, a heat-medium storage tank 20 in which a heat medium recovering waste heat while passing through the waste-heat recovery heat exchanger 12 is stored, and a boiler 30 connected to the heat-medium storage tank 20 to supply heated water into a place to be heated or a hot water usage place. An internal circulation pump 40 is disposed on a heat-medium circulation passage between the heat-medium storage tank 20 and the waste-heat recovery heat exchanger 12. Also, an external circulation pump 50 is disposed on the heat-medium circulation passage between the heat-medium storage tank 20 and the boiler 30.

The CHP generator 10 generates a large amount of heat together with the electric power during the operation. Here, waste heat generated in the CHP generator 10 is released through heat-exchange with the heat medium passing through the waste-heat recovery heat exchanger 12. Thus, it may prevent the CHP generator 10 from being overheated. In addition, the boiler 30 may utilize the heat medium absorbing the waste heat during the heating or hot water mode thereof. As a result, a combustion load required in the boiler 30 may be reduced.

However, in a case where a heating and hot water load does not exist in the boiler 30, when the internal circulation pump 40 and the external circulation pump 50 are operated to circulate the heat medium, the heat medium stored in the heat-medium storage tank 20 may be gradually increased in temperature. Here, if the temperature of the heat medium exceeds a preset temperature, the waste heat is not recovered from the CHP generator 10. As a result, the CHP generator 10 may be overheated, and thus should be shut down for a predetermined time to cause the power-generation interruption state.

To solve these limitations, in the related art, a cooling coil 14 and a cooling fan 16 are disposed on the heat-medium circulation passage within the CHP generator 10 to cool the high-temperature heat medium introduced into the waste-heat recovery heat exchanger 12 to a temperature less than the preset temperature.

However, according to the above-described structure, since the cooling coil 14, and the cooling fan 16, and a device for controlling the cooling coil 14 and the cooling fan 16 should be additionally installed within the CHP generator 10. As a result, the CHP generator 10 may be complicated in structure, and production costs may be increased.

### DISCLOSURE OF THE INVENTION

### TECHNICAL PROBLEM

The present invention provides a small-scale combined heat and power system which is capable of using existing equipment to achieve a cooling function that maintains a temperature of a heat medium stored in a heat-medium storage tank and introduced into a waste-heat recovery heat exchanger of a combined heat and power generator at a suitable temperature range for waste-heat recovery so as to enable the combined heat and power generator to continuously operate and smoothly supply power without being shout down, and a method for controlling the same.

### TECHNICAL SOLUTION

Embodiments of the present invention provide a small-scale combined heat and power (CHP) system including: a CHP generator (100) including a waste-heat recovery heat exchanger (110) recovering waste heat generated during generation of electricity; a boiler (200) including a main heat exchanger (210) through which a heat medium supplied from the waste-heat recovery heat exchanger (110) passes and a combustion fan (230) supplying air toward a burner (220) for supplying combustion heat into the main heat exchanger (210); and a heat-medium storage tank (300) storing the circulated heat medium, the heat-medium storage tank (300) supplying the stored heat medium into the waste heat recovery heat exchanger (110) of the CHP generator (100), wherein the heat-medium storage tank (300) includes: a temperature-sensing unit (530) measuring the temperature of the heat medium stored in the heat-medium storage tank; and a control unit (600) controlling the combustion fan (230) to rotate and supply air into the heat medium passing through the main heat exchanger (210) when the temperature of the heat medium measured by the temperature-sensing unit (530) is greater than a first set temperature in a case where a heating and hot water load does not exist.

In the case where the heating and hot water load does not exist or during a hot water mode, a circulation passage of the heat medium may define a heat medium passage by successively connecting the heat-medium storage tank (300), a circulation pump (200) disposed within a boiler (200) to circulate the heat medium within the heat-medium storage tank (300), the waste-heat recovery heat exchanger (110) of the CHP generator (100) connected to the circulation pump (260), the main heat exchanger (210) connected to the waste-heat recovery heat exchanger (110) and disposed within the boiler (200), a three-way valve (240) selectively supplying the heat medium supplied from the main heat exchanger (210) into one of a heating place (400) and a hot water heat exchanger (250), and the hot water heat exchanger (250) connected to the three-way valve (240) to each other.

During a heating mode, a circulation passage of the heat medium may define a heat medium passage by successively connecting the heat-medium storage tank (300), a circulation pump (200) disposed within a boiler (200) to circulate the heat medium within the heat-medium storage tank (300), the waste-heat recovery heat exchanger (110) of the CHP generator (100) connected to the circulation pump (260), the main heat exchanger (210) connected to the waste-heat recovery heat exchanger (110) and disposed within the boiler (200), a three-way valve (240) selectively supplying the heat medium supplied from the main heat exchanger (210) into one of a heating place (400) and a hot water heat exchanger (250), and the heating place (400) connected to the three-way valve (240) to each other.

Other embodiments of the present invention provide a method for controlling a small-scale combined heat and power (CHP) system, the method including: operating a CHP generator (100) including a waste-heat recovery heat exchanger (110) recovering waste heat generated during generation of electricity; storing a heat medium recovering waste heat of the CHP generator (100) into a heat-medium storage tank (300) via a boiler (200) connected to the waste-heat recovery heat exchanger (110) to circulate the heat medium into the waste-heat recovery heat exchanger (110) of the CHP generator (100); and rotating a combustion fan (230) disposed within the boiler (200) to supply air into the heat medium passing through a main heat exchanger (210) of the boiler (200) when a temperature of the heat medium stored in the heat-medium storage tank (300) is greater than a first set temperature in a case where a heating and hot water load does not exist.

The method may further include stopping the rotation of the combustion fan (230) when the temperature of the heat medium stored in the heat-medium storage tank (300) is less than a second set temperature by the operation of the combustion fan (230).

### ADVANTAGEOUS EFFECTS

According to the small-scale CHP system and the method for controlling the same, the operation of the combustion fan disposed within the boiler may be controlled so that the measured temperature of the heat medium stored in the heat-medium storage tank does not exceed the preset temperature to accumulate the waste heat of the CHP generator into the heat medium in the state where the heating and hot water load does not exist, and simultaneously, the CHP generator may be continuously operated to improve power production.

Also, according to the present invention, the CHP generator and the heat medium passage of the boiler may be connected to each other to utilize the waste heat recovered from the CHP generator for heating and hot water, thereby reducing costs required for operating the CHP system. In addition, during the heating and hot water modes, the supplied heat quantity may be easily controlled.

### BRIEF DESCRIPTION OF THE DRAWINGS

FIG. 1 is a schematic view of a small-scale combined heat and power system according to a related art,

FIG. 2 is a schematic view of a small-scale combined heat and power system according to the present invention,

FIG. 3 is a view illustrating a heat-medium circulation path in a case where a heating and hot water load does not exist in the small-scale combined heat and power system according to the present invention,

FIG. 4 is a view illustrating a heat-medium circulation path during a heating mode in the small-scale combined heat and power system according to the present invention,

FIG. 5 is a view illustrating a heat-medium circulation path during a hot water mode in the small-scale combined heat and power system according to the present invention,

FIG. 6 is a control block diagram of the small-scale combined heat and power system according to the present invention, and

FIG. 7 is a flowchart illustrating a method for controlling the small-scale combined heat and power system according to the present invention.

** DESCRIPTION OF REFERENCE NUMERALS **

10,100: Combined heat and power generator 12,110: Waste-heat recovery heat exchanger

14: Cooling coil 16: Cooling fan

20,300: Heat-medium storage tank 30,200: Boiler

40: Internal circulation pump 50: External circulation pump

210: Main heat exchanger 220: Burner

230: Combustion fan 240: Three-way valve

250: Hot water heat exchanger 260: Circulation pump

270: Gas valve 400: Heating place

510: Load detection unit 520: Temperature set unit

530: Temperature detection unit 600: Control unit

### MODE FOR CARRYING OUT THE INVENTION

Certain exemplary embodiments of the present invention will now be described in greater detail with reference to the accompanying drawings.

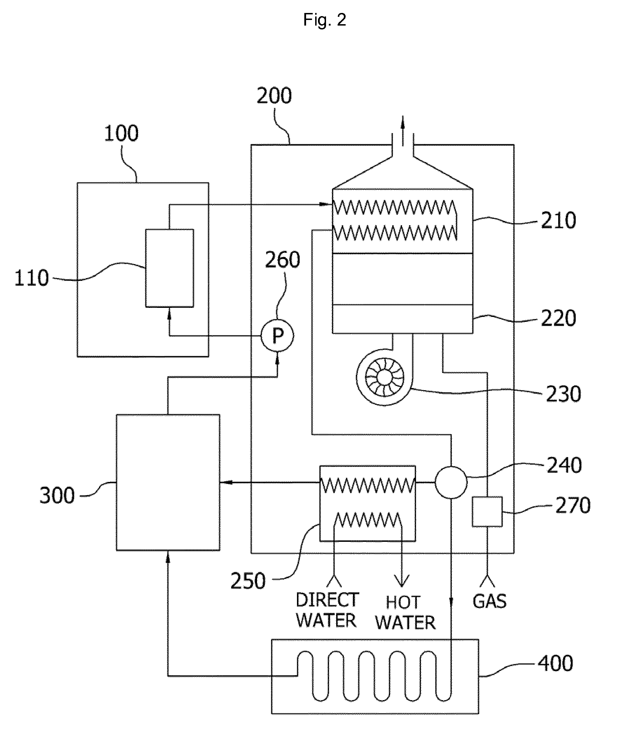

FIG. 2 is a schematic view of a small-scale combined heat and power system according to the present invention.

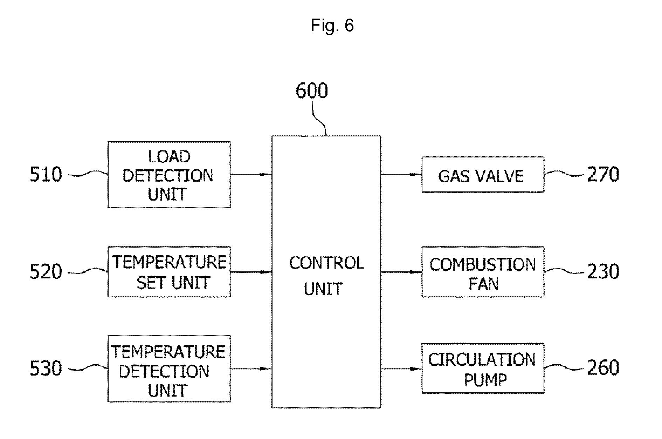

A small-scale combined heat and power (CHP) system according to the present invention includes a CHP generator 100 including a waste-heat recovery heat exchanger 110 for recovering waste heat generated when electricity is produced, a boiler 200 selectively circulating a heat medium absorbing the waste heat from the CHP generator 100 into one of a place to be heated 400 (hereinafter, referred to as a heating place) and a hot water heat exchanger 250, a heat-medium storage tank 300 storing the circulated heat medium, and a control unit (see reference numeral 600 of FIG. 6) controlling a temperature of the heat medium so that the temperature of the heat medium stored in the heat-medium storage tank 300 is maintained to a temperature range adequate for recovering the waste heat of the CHP generator 100.

Here, the heat medium may be referred to water that is heating water.

For example, the CHP 100 may be a device that is operated by a turbine (not shown) to generate electricity and also recovers waste heat generated by the turbine. The heat medium may flow into the waste-heat recovery heat exchanger 10 to recover the waste heat. Also, the heat medium is circulated into the boiler 200.

The boiler 200 includes a burner 220 generating combustion heat, a gas valve 270 adjusting an amount of combustion gas supplied into the burner 220, a main heat exchanger 210 in which the combustion heat generated in the burner 220 is heat-exchanged with the heat medium supplied from the waste-heat recovery heat exchanger 110, a combustion fan 230 supplying air required for the combustion of the burner and supply air for cooling the heat medium passing through the main heat exchanger 210, a three-way valve 240 selectively supplying the heat medium supplied from the main heat exchanger 210 into one of the heating place 400 and the hot water heat exchanger 250, the hot water heat exchanger 250 in which the heat medium passing through the three-way valve 240 is heat-exchanged with direct water during a hot water mode, and a circulation pump 260 of which an outlet is connected to the waste-heat recovery heat exchanger 110 of the CHP generator 100 to forcibly circulate the heat medium.

The direct water is introduced into the heat water heat exchanger 250. The direct water is heat-exchanged with the heat medium passing through the three-way valve 240 and is heated. Then, the heated water is supplied into the hot water usage place.

The heat-medium storage tank 300 includes a sealed container so as to store the heat medium to accumulate heat. The heat medium (i.e., heat return water) decreased in temperature after being circulated into the heating place 400 during a heating mode is introduced into the heat-medium storage tank 300. During the hot water mode, the heat medium decreased in temperature while passing through the hot water heat exchanger 250 is introduced into the heat-medium storage tank 300.

Thus, during the heating mode or hot water mode, the heat medium introduced into the heat-medium storage tank 300 is reduced in temperature to satisfy a temperature adequate for recovering the waste heat. Thus, it may be unnecessary to cool the heat medium stored in the heat-medium storage tank 300 and supplied into the waste-heat recovery heat exchanger 110.

On the other hand, in the case where a heating and hot water load does not exist, the waste heat is accumulated into the heat-medium storage tank 300 to increase a temperature of the heat medium. Also, in a case where the heat medium has a temperature greater than a preset temperature (a first set temperature), the waste-heat recovery function is not performed. Thus, it may be unnecessary to perform the cooling process for reducing a temperature of the heat medium.

According to the present invention, the combustion fan 230 is rotated to supply low-temperature air into the heat medium passing through the main heat exchanger 210, thereby decreasing the temperature of the heat medium to a temperature less than the preset temperature. These effects and control method will be described below.

The heat medium introduced into the heat-medium storage tank 300 is supplied into the waste-heat recovery heat exchanger 110 of the CHP generator 100 by the operation of the circulation pump 260. For this, the heat-medium storage tank 300 is connected to the circulation pump 260 through a pipe in which the heat medium flows.

According to the above-described structure, since the waste-heat recovery heat exchanger 110 of the CHP generator 100 and a heating water circulation cycle of the boiler 200 define one closed passage, the system may be simplified in structure.

Also, the heat medium absorbing the waste heat while passing through the waste-heat recovery heat exchanger 110 of the CHP generator 100 may be supplied toward the heating place and the hot water heat exchanger 250. Thus, the waste heat may be utilized for all of the heating and hot water.

Also, in a case where the heating and hot water load does not exist in a state where the CHP generator 100 and a heat-medium passage (a heating passage and a hot water passage) of the boiler 200 are connected to each other, the operation of the boiler 200 may be stopped, and the circulation pump 260 may be operated in a state where the CHP generator 100 is continuously operated to accumulate the waste heat into the heat medium. Thus, since the accumulated heat energy is usable for heating and hot water, energy efficiency may be improved.

Hereinafter, a heat-medium circulation path for each operation mode of the small-scale CHP system according to the present invention will be described with reference to the accompanying drawings.

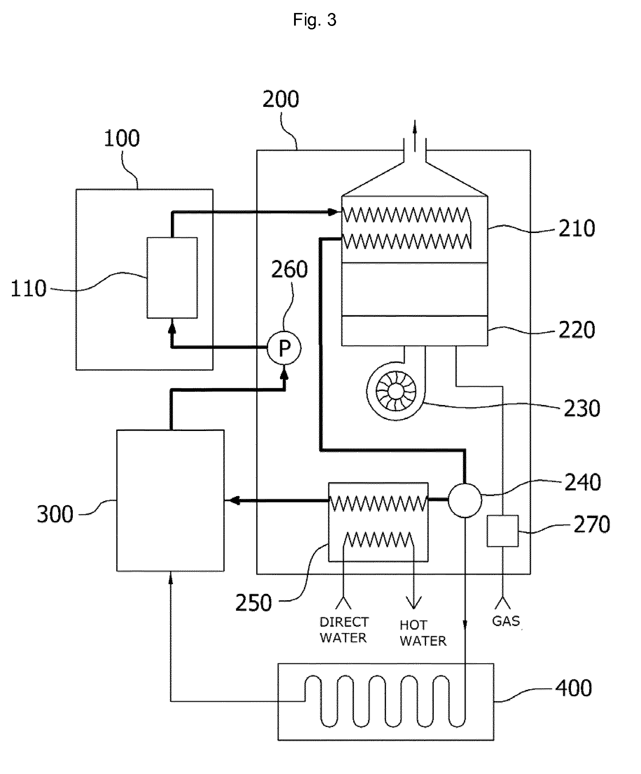

FIG. 3 is a view illustrating a heat-medium circulation path in a case where a heating and hot water load does not exist in the small-scale CHP system according to the present invention,

In a case where the heating and hot water load does not exist, the operation of the boiler 200 is stopped, and only the CHP generator 100 is operated. Of cause, the circulation pump 260 within the boiler 200 is operated to circulate the heat medium.

When the circulation pump 260 is operated, the heat medium stored in the heat-medium storage tank 300 passes through the circulation pump 260 and then is introduced into the waste-heat recovery heat exchanger 110 of the CHP generator 100.

In this case, the CHP generator 100 is operated to produce electricity and generate the waste heat. Here, heat energy is transferred into the heat medium passing through the waste-heat recovery heat exchanger 110 by the waste heat.

The heat medium passing through the waste-heat recovery heat exchanger 110 is supplied into the three-way valve 240 via the main heat exchanger 210.

Here, the three-way valve 240 blocks a flow of the heat medium toward the heating place 400 to allow the heat medium to flow toward the hot water heat exchanger 250. Thus, the heat medium may be supplied into the hot water heat exchanger 250. In this case, since the hot water load does not exist, the heat medium is not heat-exchanged with the direct water.

The heat medium passing through the hot water heat exchanger 250 is introduced into the heat-media storage tank 300.

Thereafter, the above-described processes may be repeatedly performed, and thus, the connected close loop may define the heat medium passage.

As described above, when the circulation of the heat medium is performed, the heat energy is accumulated within the heat-medium storage tank 300. When the heat medium within the heat-medium storage tank 300 has a temperature greater than the first set temperature, the control unit 600 rotates the combustion fan 230 within the boiler 200 to supply low-temperature air introduced from the outside of the boiler 200 toward the main heat exchanger 210, thereby decreasing the temperature of the high-temperature heat medium passing through the main heat exchanger 210.

Here, since the gas valve 270 is closed, the combustion does not occur in the burner 220. Also, air supplied through the combustion fan 230 is supplied toward the main heat exchanger 210 and then heat-exchanged. Then, the air is discharged to the outside of the boiler 200.

Here, the temperature of the heat medium within the heat-medium storage tank 300 may be set by a temperature set unit 520. Also, the temperature of the heat medium may be detected by a temperature detection unit 530 disposed within the heat-medium storage tank 300 or on the heat medium passage between the heat-medium storage tank 300 and the waste-heat recovery heat exchanger 110 (see FIG. 6).

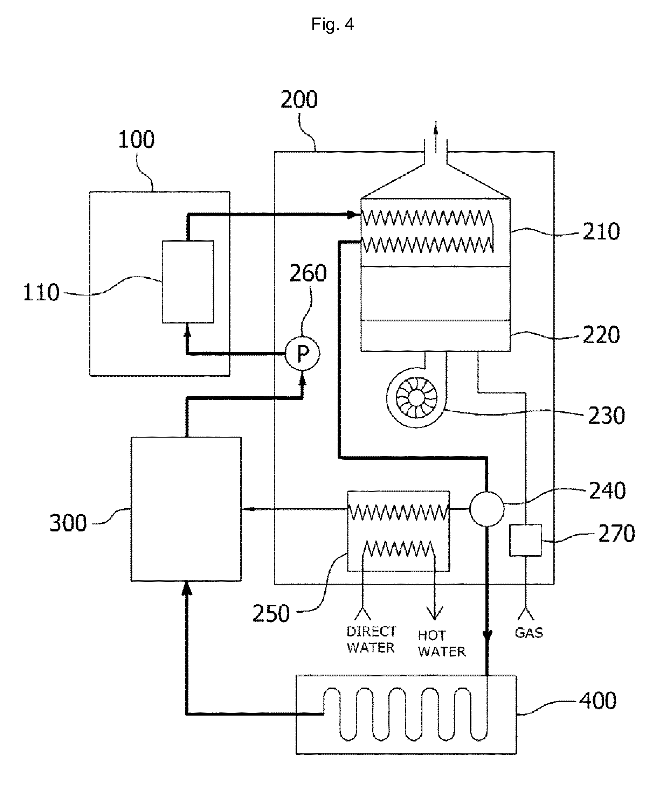

FIG. 4 is a view illustrating a heat-medium circulation path during the heating mode in the small-scale CHP system according to the present invention,

When the heating mode is performed, the boiler 200 is operated, and the gas valve 270 is opened to cause the combustion of the burner 220. The three-way valve 240 blocks a flow of the heat medium toward the hot water heat exchanger 250 to allow the heat medium to flow toward the heating place 400.

Here, the temperature detection unit 530 measures a temperature of the heat medium within the heat-medium storage tank 300. Here, in a case where it is determined that the heating effect is not insufficient by using only the heat medium within the heat-medium storage tank 300 according to the measured result, the combustion may occur in the boiler 200.

When the circulation pump 260 is operated, the heat medium stored in the heat-medium storage tank 300 passes through the circulation pump 260 and then is introduced into the waste-heat recovery heat exchanger 110 of the CHP generator 100.

The heat medium passing through the waste-heat recovery heat exchanger 110 is supplied into the three-way valve 240 via the main heat exchanger 210 after the heat medium is heated by the combustion heat of the burner 220.

Since the three-way valve 240 is opened toward the heating plate 400, the heat medium is decreased in temperature while passing through the heating place 400 as heating supply water. Then, the heat medium, i.e., the heating supply water is converted into the heat return water and then introduced into the heat-medium storage tank 300.

Thereafter, in the heating mode, the above-described processes may be repeatedly performed, and thus, the connected close loop may define the heat medium passage.

Although the combustion occurs in the burner 220 in the current embodiment, the present invention is not limited thereto. For example, in a case where the heating effect is sufficient by using only the heat energy accumulated in the heat-medium storage tank 300, the combustion may not occur in the burner 220. Here, only the CHP generator 100 may be operated.

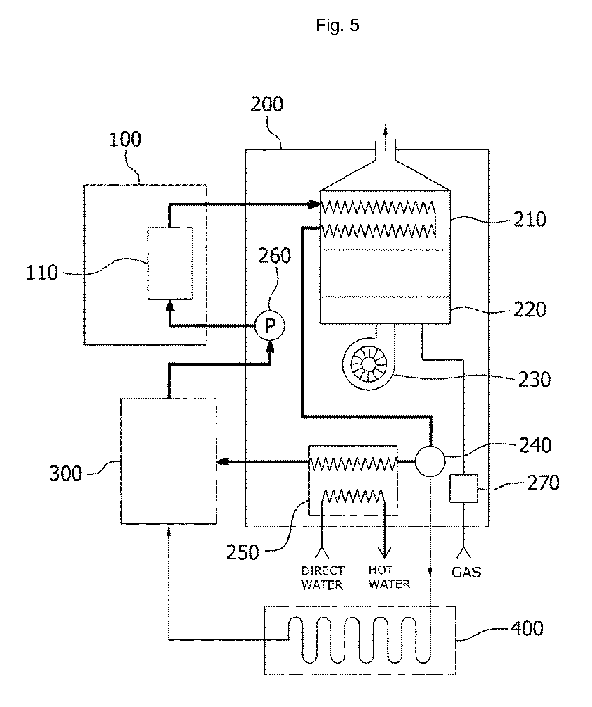

FIG. 5 is a view illustrating a heat-medium circulation path during the hot water mode in the small-scale CHP system according to the present invention.

When the hot water mode is performed, the boiler 200 is operated to cause the combustion of the burner 220. The three-way valve 240 blocks a flow of the heat medium toward the heating place to allow the heat medium to flow toward the hot water heat exchanger 250.

Here, the temperature detection unit 530 measures a temperature of the heat medium within the heat-medium storage tank 300. Here, in a case where it is determined that the hot water effect is not insufficient by using only the heat medium within the heat-medium storage tank 300 according to the measured result, the combustion may occur in the boiler 200.

The flow of the heat medium in the hot water mode is the same as that of the heat medium of FIG. 3.

The heat medium is heated by the combustion heat of the burner 220 in the main heat exchanger 210 and then is supplied into the three-way valve 240.

The heat medium is decreased in temperature by being heat-exchanged with the direct water in the hot water heat exchanger 250 and then is introduced into the heat-medium storage tank 300.

Thereafter, in the hot water mode, the above-described processes may be repeatedly performed, and thus, the connected close loop may define the hot water passage.

Although the combustion occurs in the burner 220 in the current embodiment, the present invention is not limited thereto. For example, in a case where the hot water supply is sufficient by using only the heat energy accumulated in the heat-medium storage tank 300, the combustion may not occur in the burner 220. Here, only the CHP generator 100 may be operated.

Hereinafter, a method for controlling the small-scale CHP system according to the present invention will be described.

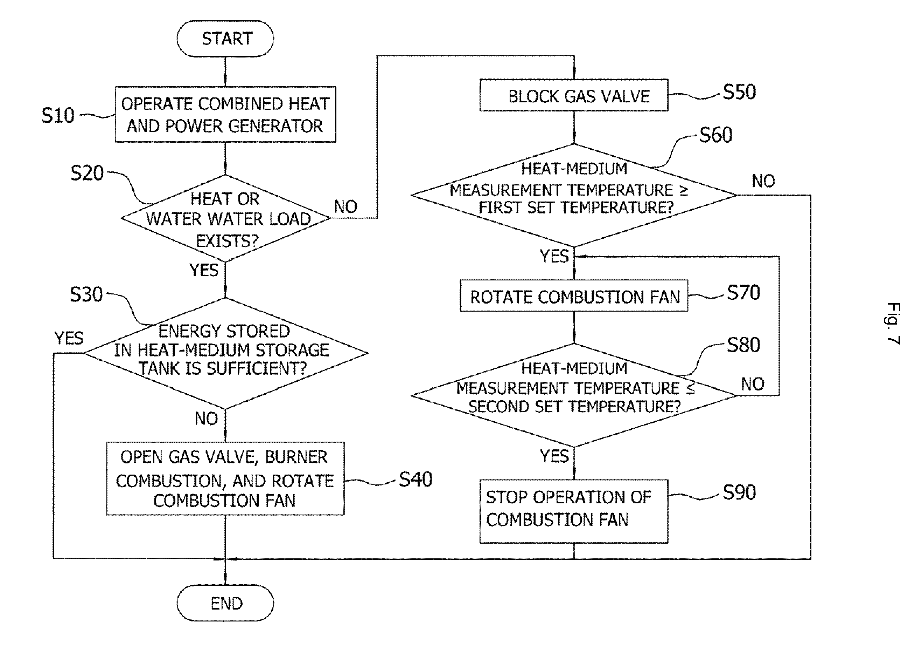

FIG. 6 is a control block diagram of the small-scale CHP system according to the present invention. FIG. 7 is a flowchart illustrating a method for controlling the small-scale CHP system according to the present invention.

Referring to FIG. 6, a control unit 600 may control operations of a gas valve 270, a combustion fan 230, and a circulation pump 260 by receiving signals from a load detection unit 510, a temperature set unit 520, and a temperature detection unit 530 to determine a state of a CHP system.

Referring to FIG. 7, a heat medium recovering waste heat generated in a CHP generator 100 in a state where the CHP generator 100 is operated is temporally stored in a heat-medium storage tank 300 via a boiler 200 connected to a waste-heat recovery heat exchanger 110 by an operation of a circulation pump 260, and then, the heat medium is circulated into the waste-heat recovery heat exchanger 110 of the CHP generator 100 (S10).

Next, the load detection unit 510 detects whether a heating or hot water load exists on the basis of a heating or hot water mode selected through a room controller (not shown) by a user to transmit a signal corresponding to the detected result into the control unit 600 (S20).

Here, when it is determined that the heating or hot water load exists, the control unit 600 determines whether energy stored in the heat-medium storage tank 300 is sufficient for heating or hot water (S30). If it is determined that the energy is sufficient, the heat medium stored in the heat-medium storage tank 300 is supplied into a heating place 400 or a hot water heat exchanger 250 without operating the boiler 200. On the other hand, when it is determined that the energy is insufficient, the control unit 600 opens the gas valve 270 so that the boiler 200 is operated in a normal heating or hot water mode to cause combustion in the burner 220. In addition, the control unit 600 controls the combustion fan 230 and the circulation pump 260 so that the combustion fan 230 is rotated to supply air required for the combustion of the burner 220, and the circulation pump 260 is operated (S40). Here, a three-way valve 240 may be switched into a corresponding passage according to the heating mode or the hot water mode.

If it is determined that the heating or hot water load does not exist, the control unit 600 controls the gas valve 270 so that the gas valve 270 blocks the gas valve 270 to prevent the combustion from occurring in the burner 220 (S50). Also, the control unit 600 compares a first set temperature set in the temperature set unit 520 to a temperature of the heat medium within the heat-medium storage tank 300 measured by the temperature detection unit 530 (S60).

When the measured temperature of the heat medium is greater than the first set temperature on the basis of the comparison result, the combustion fan 230 is rotated to decrease the temperature of the heat medium passing through a main heat exchanger 210 (S70). When the combustion fan 230 is continuously rotated for a predetermined time, the temperature of the heat medium may be gradually decreased.

Next, a second set temperature set in the temperature set unit 520 is compared to a temperature of the heat medium within the heat-medium storage tank 300 measured by the temperature detection unit 530 (S80).

Here, when the measured temperature of the heat medium is less than the second set temperature, the rotation of the combustion fan 230 is stopped (S90). On the other hand, when the measured temperature of the heat medium is greater than the second set temperature, the rotation of the combustion fan 230 is maintained.

As described above, since the temperature of the heat medium introduced into the CHP generator 100 is adjusted by controlling the rotation of the combustion fan 230 disposed within the boiler 200 to satisfy a predetermined range even though the heating or hot water load does not exist, it may be unnecessary to provide separate equipment for cooling the heat medium. Thus, existing equipment may be utilized.

Also, when the CHP generator 100 and the heat medium passage of the boiler 200 are integrally connected to each other, a heat quantity control system of the boiler 200 may be utilized to finely control a heat quantity required for heating and hot water.

Also, the heat energy accumulated within the heat-medium storage tank 300 may be used for heating or hot water. When the heating and hot water load does not exist, only the CHP generator 100 may be operated to reduce costs due to the operation of the CHP system.

## Claims

1. A small-scale combined heat and power (CHP) system comprising:
a CHP generator (100) comprising a waste-heat recovery heat exchanger (110) recovering waste heat generated during generation of electricity;
a boiler (200) comprising a main heat exchanger (210) through which a heat medium supplied from the waste-heat recovery heat exchanger (110) passes and a combustion fan (230) supplying air toward a burner (220) for supplying combustion heat into the main heat exchanger (210); and
a heat-medium storage tank (300) storing the circulated heat medium, the heat-medium storage tank (300) supplying the stored heat medium into the waste heat recovery heat exchanger (110) of the CHP generator (100),
wherein the heat-medium storage tank (300) comprises:
a temperature-sensing unit (530) measuring the temperature of the heat medium stored in the heat-medium storage tank; and
a control unit (600) controlling the combustion fan (230) to rotate and supply air into the heat medium passing through the main heat exchanger (210) when the temperature of the heat medium measured by the temperature-sensing unit (530) is greater than a first set temperature in a case where a heating and hot water load does not exist.

2. The small-scale CHP system of claim 1, wherein, in the case where the heating and hot water load does not exist or during a hot water mode, a circulation passage of the heat medium defines a heat medium passage by successively connecting the heat-medium storage tank (300), a circulation pump (200) disposed within a boiler (200) to circulate the heat medium within the heat-medium storage tank (300), the waste-heat recovery heat exchanger (110) of the CHP generator (100) connected to the circulation pump (260), the main heat exchanger (210) connected to the waste-heat recovery heat exchanger (110) and disposed within the boiler (200), a three-way valve (240) selectively supplying the heat medium supplied from the main heat exchanger (210) into one of a heating place (400) and a hot water heat exchanger (250), and the hot water heat exchanger (250) connected to the three-way valve (240) to each other.

3. The small-scale CHP system of claim 1, wherein, during a heating mode, a circulation passage of the heat medium defines a heat medium passage by successively connecting the heat-medium storage tank (300), a circulation pump (200) disposed within a boiler (200) to circulate the heat medium within the heat-medium storage tank (300), the waste-heat recovery heat exchanger (110) of the CHP generator (100) connected to the circulation pump (260), the main heat exchanger (210) connected to the waste-heat recovery heat exchanger (110) and disposed within the boiler (200), a three-way valve (240) selectively supplying the heat medium supplied from the main heat exchanger (210) into one of a heating place (400) and a hot water heat exchanger (250), and the heating place (400) connected to the three-way valve (240) to each other.

4. A method for controlling a small-scale combined heat and power (CHP) system, the method comprising:
operating a CHP generator (100) comprising a waste-heat recovery heat exchanger (110) recovering waste heat generated during generation of electricity;
storing a heat medium recovering waste heat of the CHP generator (100) into a heat-medium storage tank (300) via a boiler (200) connected to the waste-heat recovery heat exchanger (110) to circulate the heat medium into the waste-heat recovery heat exchanger (110) of the CHP generator (100); and
rotating a combustion fan (230) disposed within the boiler (200) to supply air into the heat medium passing through a main heat exchanger (210) of the boiler (200) when a temperature of the heat medium stored in the heat-medium storage tank (300) is greater than a first set temperature in a case where a heating and hot water load does not exist.

5. The method of claim 4, further comprising stopping the rotation of the combustion fan (230) when the temperature of the heat medium stored in the heat-medium storage tank (300) is less than a second set temperature by the operation of the combustion fan (230).
